(19) Europäisches Patentamt / European Patent Office / Office européen des brevets

(11) **EP 3 944 197 A1**

(12) **EUROPEAN PATENT APPLICATION**

(43) Date of publication:
26.01.2022 Bulletin 2022/04

(21) Application number: 20186981.5

(22) Date of filing: 21.07.2020

(51) International Patent Classification (IPC):
*G06T 11/20* (2006.01)

(52) Cooperative Patent Classification (CPC):
G06T 11/206

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Transport For London
Stratford
London E20 1JN (GB)

(72) Inventors:
• GAMMON, Ben
London, E20 1JN (GB)
• KOPS, Hanna
London, E20 1JN (GB)
• GRAY, Alex
London, E20 1JN (GB)
• GROVES, Richard
London, E20 1JN (GB)

(74) Representative: CSY Herts
Helios Court
1 Bishop Square
Hatfield, Hertfordshire AL10 9NE (GB)

(54) **DRAWING LINE PATHS**

(57)    A method and apparatus for the computerised display of a 2-dimensional information graph, comprising the steps of recording the information graph in a database as an ordered series of station objects, each respective station object having stored coordinates which associate the station object with a position on the graph, reading a current station and a next station from the database, testing whether a straight vertical or horizontal line, or a straight line at a predetermined subset of angles, such as + 45 degrees and + 90 degrees, can be drawn between the current station and the next station, and if a straight line can be drawn, drawing the line, making the next station the current station and then taking a further next station from the ordered series and repeating the method, if a straight line cannot be drawn between the current station and the next station, extrapolating a line from the current station at angles selected from the predetermined subset, and extrapolating a line from the next station at angles selected from the predetermined subset, testing to see where the extrapolated lines would intersect, recording the intersection point and drawing a line between the current station and the intersection point and between the intersection point and the next station, making the next station the current station and then taking a further next station from the ordered series and repeating the method.

Fig. 1

**Description**

The present invention relates to methods and apparatus for the computerised display of an information graph, such as a schematic railway map, whilst retaining styling cues that aid human readability.

In a system holding map elements as vector or other non-bitmap, digital representations of an information graph, such as a map and in particular a map for a railway system such as the London underground system ("The Tube"), human presentation of the graph requires choices to be made about how the vector elements are represented. This ensures that the graph is assimilated and quickly understood.

This is a complex problem which cannot, in real time, be dealt with manually. It requires fast processing and logic to generate an information graph which is easily read and understood.

There are a small number examples of a railway map recreated in code - but they are either in SVG (Scalable Vector Graphics) format, or in HTML/CSS - which do not have the features to support zooming or real-time redrawing of the map based on live information and do not include the ability to implement automated rules around the presentation of the map under scaling operations and requests for different information labels to be applied.

In a first aspect of the invention, there is provided a method for the computerised display of a 2-dimensional information graph, comprising the steps of recording the information graph in a database as an ordered series of station objects, each respective station object having stored coordinates which associate the station object with a position on the graph, reading a current station and a next station from the database, testing whether a straight vertical or horizontal line, or a straight line at a predetermined subset of angles, such as + 45 degrees and + 90 degrees, can be drawn between the current station and the next station, and if a straight line can be drawn, drawing the line, making the next station the current station and then taking a further next station from the ordered series and repeating the method, if a straight line cannot be drawn between the current station and the next station, extrapolating a line from the current station at angles selected from the predetermined subset, and extrapolating a line from the next station at angles selected from the predetermined subset, testing to see where the extrapolated lines would intersect, recording the intersection point and drawing a line between the current station and the intersection point and between the intersection point and the next station, making the next station the current station and then taking a further next station from the ordered series and repeating the method.

In a second aspect, the invention provides a computer program product directly loadable into the internal memory of a digital computer, comprising software code portions for performing the steps of the method aspect above, when said product is run on a computer.

In a third aspect the invention provides a computer system comprising an execution environment for running computer code portions and arranged to carry out the method aspect above.

Embodiments of the invention will now be described by way of example, with reference to the drawings in which:-

Figure 1 is an example of railway map;

Figure 2 is a schematic diagram showing the angle schema used by the IOS addArc method;

Figure 3 is a schematic diagram showing the geometry of a 90 degree turn;

Figure 4 is a schematic diagram showing the geometry of a 45 degree turn; and

Figure 5 is a diagram showing branch lines - a section of the London Metropolitan line.

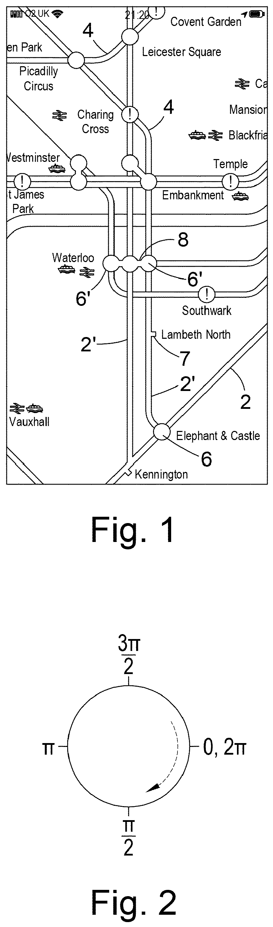

The embodiment below relates to an iOS/iPadOS software application which can show a map, such as that of Figure 1. The skilled person will appreciate that the same principles can be applied to an application for other mobile computing platforms such as Android, or for desktop operating systems such as Linux, MacOS, or Windows.

The core functionality is a system for displaying a Digital Tube map with differing data, and/or at different zoom levels. In the prior art digital representations of the Tube Map, a map image is stored as a fixed, static representation such a PNG or PDF file. When this is scaled, the elements are simply all scaled uniformly and the data which is available for viewing at any particular zoom level is cropped according to the size of the display screen. In the present invention, instead, a topologically correct map is stored and drawn dynamically in computer program code. The map can then be dynamically scaled when a user requests a zoom in or out operation. The entire map can also be redrawn in a different way to provide a different set of data labels on the map, based on data feeds - such as disruption on the rail system - or user preferences such as accessibility needs.

The schematic tube map at the heart of the app uses lines in 8 directions: horizontal, vertical and at the four 45° angles from those horizontal and vertical directions. It has a well specified curvature when bends are needed in the lines. These are part of a design specification for The London tube map which is designed to aid readability. Other Maps may have different specifications and different angles and curvatures. However, the skilled person will understand that the principles described below can be applied to any style guide for Maps.

The map is primarily made up of straight line segments 2 joined by curved sections 4 and with unfilled circles 6 denoting stations with interchanges between different rail lines. Intermediate stations are denoted with relatively small, orthogonal tags 7. In some sections of the map, multiple lines 2' are drawn in parallel to denote the convergence of different routes, and also where interchanges are close together but not immediately adjacent, they may be denoted with several circles 6', joined by straight lines 8.

The map is held in a database describing the locations of the stations using cartesian coordinates. The stations 6 and 7 are held in an ordered list with each subsequent station in the list being an adjacent station in the real world, and therefore on the map. The algorithm takes a current station and then calculates how to draw the correct format of line to the next station in the list. Thus when traversing the list in order, each station is considered in an order which makes sure that lines are only drawn between appropriate stations, and this appropriateness is controlled by having the list ordered correctly in the database.

In order to make sure that the lines 2 only travel in one of the eight allowable directions, it is necessary to derive an algorithm that dynamically draws lines in the right way. One approach when drawing lines between stations on the canvas, is to consider the line as a moving point, leaving a trail behind it. The point is constrained to only move straight ahead, or to turn left or turn right at 45° or 90°.

So to draw a path from one station to another we consider the following:

station 1: at x1, y1
station 2: at x2, y2

- Firstly, the algorithm considers the simplest case in which a straight line can be drawn directly from one station to the next one. In other words the algorithm tests whether any turns need to be made. This can be determined as follows:

    o is the difference between x1 & x2 < 1 ? -> Yes: It's a vertical straight line
    o is the difference between y1 & y2 < 1 ? -> Yes: It's a horizontal straight line
    o is the difference between x1 & x2 the same as that between y1 & y2? -> Yes: It's a straight (45° diagonal) line

- If it is straight then draw a line from station 1 to station 2 and move the line cursor to station 2, and remember station 1 position as the 'previous point' (see below)

Otherwise, if a straight line cannot be drawn between the two stations, then it is necessary to determine where to make a turn to get from station 1 to station 2. In the moving point technique noted above, this requires knowledge of in what direction the line is already travelling, in order to know what 'forward' is - for this we keep track of the 'previous point' on the line.

prev point: x0, y0

With the coordinates of the previous point and station 1, we can work out the line's current direction of travel: travel vector: (x1-x0, y1-y0) [usually normalized to a unit vector curDirection ]

We then project a line backwards from station 2 and forwards from station 1 and test these lines against each possible turn (left 45o, left 90o, right 45o, right 90o) in order to see if the projected line back from station 2 will intersect the line forward from station 1 in the direction of the travel vector.

Given:

p1 = station 1 position
s1 = curDirection
p2 = station 2 position
s2 = vector of turn from our current direction - left/right 45/90

Then the following code will return either a point of intersection or nil if no intersect is possible:
*[NB: The turn vector (s2) is in the space of the current line direction - so this intersection code uses it backwards to act as a vector from the end point to the intersection point - which is why the calculation of t has sign differences to s]*

```
static func calculateLineIntersection(p1: CGPoint, s1: CGVector, p2: CGPoint, s2: CGVector)
-> CGPoint?
{
        let s: CGFloat = (-s1.dy * (p1.x - p2.x) + s1.dx * (p1.y - p2.y)) / (-s2.dx * s1.dy
        + s1.dx * s2.dy)
        let t: CGFloat = ( s2.dx * (p1.y - p2.y) - s2.dy * (p1.x - p2.x)) / (-s2.dx * s1.dy
        + s1.dx * s2.dy)
        if s>=0.0 && t>=0.0
        {
                // Return the intersection point
                return CGPoint(x: p1.x + (t * s1.dx), y: p1.y + (t * s1.dy))
        }
        else
        {
            return nil // No intersection in the forward direction
        }
}
```

By testing each of the four possible turn directions the one that makes an intersection is used to:

- Draw a line from station 1 to the intersection point
- Draw a line from the intersection point to station 2
- Remember the intersection point as the 'previous point'

The algorithm then repeats to look for a line to the next station.

If none of the four turns produces an intersection point then there is a problem in the Station coordinate data and it needs to be reviewed as it is not permitted to have more than one turn between stations in the style guide.

**Adding some curves to radius the corners**

The above technique will produce a map with hard turns at the intersection points, so to get it looking right, it is necessary to add some curves to provide radiused turns, rather than hard turns.

Drawing curves in a path in iOS can be done in a several ways, but to produce a proper part of a circle we need to use the addArc method which takes various parameters. In this iOS case, the angle system (Figure 2) used in drawing is a little unusual in that it has 0º at 3 o'clock, 90º at 6 o'clock etc. rather than 0º at 12 o'clock which is more normal. The skilled person will understand how to achieve similar results on other operating system platforms.

For the iOS case and as illustrated in Figure 2 (Angles shown in radians).

The addArc method needs the following information:

- center: The position of the centre of the circle
- radius: Radius of the circle
- startAngle: Where on the circle to start the curve
- endAngle: Where on the circle to end the curve
- clockwise: Which way to go around the circle

To recap, by calculating the point of intersect we have the following information:

- curPoint: Where we are starting from
- curDirection: The direction our line is moving in
- intersect: The point of intersect (where we would change direction when not using a curve)

We also know:

- turnAmount: How far to turn at the intersect point (+/- 45 or 90 degrees)
- lineWidth: This is a standard value from the style guide and is used to calculate the radius of the circle (the line standard for the London tube shows an inner circle of radius = 3 * lineWidth, with a lineWidth thick circle around the outside. As the code works from the centre of the lineWidth we thus want to draw a circle of radius 3.5 * lineWidth)

Given this information we can calculate the angle on the circle where our curve will start.

With reference also to Figures 2, 3 and 4, the code segment below, shows one way of doing this:

```
static func calculateStartingAngle(curDirection: CGVector, isCW: Bool) -> CGFloat
{
        // What is the angle of the current path?
        var angleOfCurrentPath = atan2(curDirection.dy, curDirection.dx)
        if angleOfCurrentPath < 0.0
        {
                angleOfCurrentPath += 2.0 * .pi // Put into a 0 to 2π range
        }
        // Getting which of the octants of the circle we are working in
        let octant: Int = Int(0.5 + angleOfCurrentPath/(0.25 * .pi)) % 8 // 0.5 deals with
        items at things like 0
        // Convert an octant value into an arc system angle: Octant 0 is at the top, 1 is
        45° clockwise, 2 is 3 o
        let baseAngleCW: [CGFloat] = [1.5, 1.75, 0.0, 0.25, 0.5, 0.75, 1.0, 1.25]
        let baseAngleCCW: [CGFloat] = [0.5, 0.75, 1.0, 1.25, 1.5, 1.75, 0.0, 0.25]
        let startAngle: CGFloat = isCW ? baseAngleCW[octant] : baseAngleCCW[octant]

        return startAngle * .pi
}
```

Once we know the startAngle the endAngle can be determined by contining round the circle in the right direction for the right amount:

```
let endAngle = startingAngleOfCurve + (isCW ? 1.0 : -1.0) * (turnIsNinetyDegrees ? 0.5 :
0.25) * .pi
```

We now need to calculate the starting point on the curve and the centre of the curve:
Figured 3 and 4 show the respective geometries of the turns for 90 and 45 degree bends:
In both Figures, s is the starting point, i is the intersect point if there were no curves, e is the end point (where we want to turn to, e.g. so that there is a straight line to station 2) and x is the line width, so the radius of the curve is 3.5 * x

We need to know pt1 (the point where we go from a straight line to a curve) and c the centre point of the curve.

Given that pt1 is on the circle we know it is a radius away from c, and from trigonometry it is possible to determine the distance Z (the tangential distance from pt1 to the intersect) is given by **tan(turnAmount/2) * radius**
We also know that i -> pt1 -> s is a straight line, so pt1 is found by:

```
let z = tan(abs(turnAmount*0.5).degreesToRadians) * curveRadius
```

```
let pt1 = intersect - curDirection * z
```

We now have enough information to calculate the centre point c because pt1 is on the circle, and at startAngle around the circle so:

```
let offsetVector = CGVector(dx: cos(startAngle), dy: sin(startAngle))
```

```
let centrePt = pt1 - startPtOffset * curveRadius
```

And we now have all the information we need to draw the arc:
centrePt , radius , startAngle , endAngle and the direction (clockwise or not)
Thus with this information, the arc can be drawn. And the lines can be truncated at the points pt1 and pt2 respectively, so that they do not join at a hard turn, but are instead joined by the arc.
As a cross-check, the code may also calculate pt2 using the same principles, and thus check to make sure the results for the centre coordinates are consistent.
After drawing the arc we then draw a line to endPoint from pt2 (i.e. the lines are truncated so that they do not make a hard turn) and set the intersect point as prevPoint ready for the next part of the line - we use intersect as the previous point as it is a straight line from there to endPoint giving us the proper currentDirection vector for the next section.

**Branches**

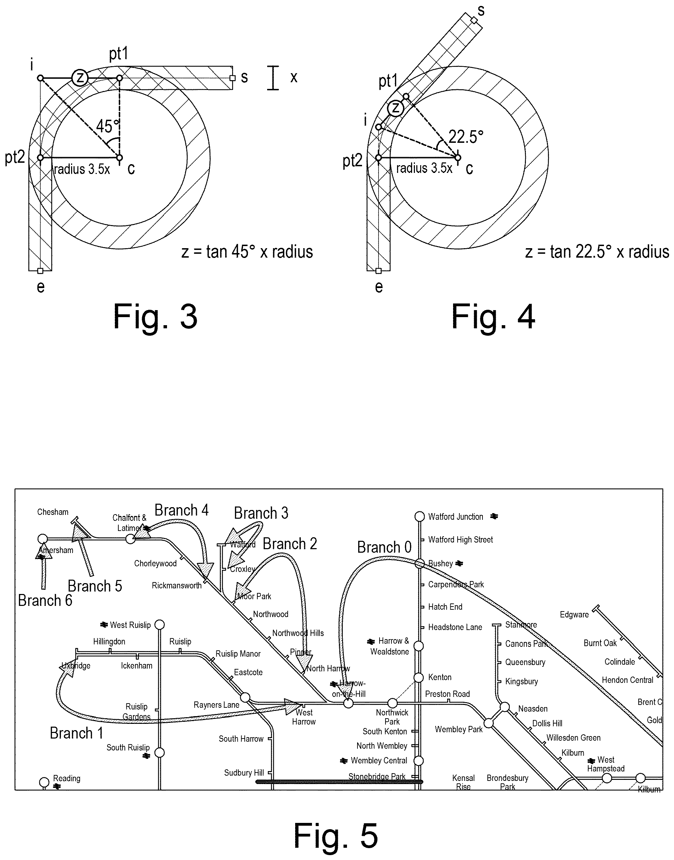

With reference to Figure 5, when a line has more than one branch, the situation is more complex.
If the simple methodology described above were used, there would be a line drawn between the end of a branch and the starting point of the next branch. With reference to the Figure, for example if the algorithm progressed from the terminus station "Watford" 10, to the next station in the list (Rickmansworth 12, for example), then a line would incorrectly be drawn to Rickmansworth 12 thus suggesting that the branch line did not terminate at Watford station 10, but instead performed a loop.
This problem can be solved using an enhancement of the principles discussed above. Each branch can be drawn using the same principles described above, but at the end of a branch, it is necessary to reset the drawing position to the start of the next branch, so that a new line (for the next portion of the line that needs to be drawn) can be drawn without looping back from the end of the branch.
If a branch has a previous branch specified in an array "prevBranchIds", then the last point from this previous branch is prepended to this branch. The key data that will be required is present above - the direction the line was taking needs to be known, and where it starts. The second of these can readily be established, as if there is a previous branch, it starts at the position of the last stop on the previous branch (otherwise it just starts at the first point on that branch), and the direction can be established using the value of the prevPoint used to draw the last piece of the previous branch.
The stations are thus assigned to a particular branch each of which has a branchId. The code then traverses each station in that branch until it reaches the end of the set of stations in that branch. The writing position must then jump to the appropriate coordinates to start drawing the next branch. This is achieved by checking oi fthgere is a prviosu btranch sp[ecifed, if there is, the process looks back at the previous branch and finds the position of the last station in that branch, which should then be the starting point for the new branch.
Thus, two pieces of data are captured at the end of each branch:
prevBranchData[branch.branchId] = [ kKey_PrevPoint: prevPoint!, kKey_LastPosition: path.currentPoint]
The current branchId is used as the key into a dictionary, and then at the start of a branch it is used to look up in this prevBranchData dictionary to find the values to load into prevPoint and where to move the start of the line path to (point in kKey_LastPosition field).
Each set of stops (in the preferred embodiment, stored as an array) is assigned to a particular branchId and within that branch, the stops are ordered as described above for the non-branch case. Then a particular branch is drawn using the techniques described above until the end of the branch, which is determined by reaching the end of the ordered set of stops for that particular branch.
At that point, the next branchId is selected which points to a new, ordered set of stops, but before drawing commences, and only if the branch has a previous branch specified in array "prevBranchIds", the previous point i.e. the starting coordinates for drawing this new branch, is set as the last stop in the previous branch.
With reference to Figure 5, a set of stops forming a branch could, for example, be the branch up to Harrow on the Hill (branch 0), the next branch could be the West Harrow to Uxbridge branch (branch 1), and the next branch (branch 2) after that could be from North Harrow to Moor Park, and so on to Branch 6 as shown on the Figure. The branches are drawn in order and the stations within each branch are drawn in order.
Thus branch 0 can start to be drawn towards Harrow on the Hill and then branch 1 can be drawn. It will be noted that branch 0 is the first branch of the Metropolitan line and has no previous branch. Thus the starting point for drawing of the first stop is the first stop in the array that contains branch 0.
At the start of drawing branch 1, the system notes that there is a previous branch (branch 0) and thus takes the last stop from branch 0 as the starting point for drawing branch 1. This ensures that there is a (correct) continuous line between Harrow on the Hill and West Harrow stops.
After completing Branch 1 at Uxbridge, the drawing position is reset back, ready for drawing Branch 2. The previous Branch recorded for Branch 2 is Branch 0, so that Branch 2 starts to be drawn from Harrow on the Hill (the lats stop of Branch 0 which is pre-pended to Branch 2).

The same process is repeated through to Branch 6, at which point drawing of a different line commences with a new Branch 0 for that line.

The code segment below shows the recovery of an array of stops, which is indexed by the branchId parameter.

```
static func getBranchStopsWithPrev(for line: Line, _ branch: Line.Branch) ->
ContiguousArray<Line.Branch.BranchStop> {
        guard let prev = line.branches.filter({ $0.branchId == branch.prevBranchIds.first
}).first?.stops.last else {
                return ContiguousArray(branch.stops)
        }
        return ContiguousArray([prev] + branch.stops)
    }
```

This array can then be used to find the coordinates of the last stop in the previous branch to reset the first drawing point before continuing with the next branch.

## Claims

1. A method for the computerised display of a 2-dimensional information graph, comprising the steps of:-

    i. Recording the information graph in a database as an ordered series of c objects, each respective station object having stored coordinates which associate the station object with a position on the graph,
    ii. Drawing lines between the station objects by:-
    iii. Reading a current station and a next station from the database, testing whether a straight vertical or horizontal line, or a straight line at a predetermined subset of angles, such as + 45 degrees and + 90 degrees, can be drawn between the current station and the next station, and if a straight line can be drawn, drawing the line, making the next station the current station and then taking a further next station from the ordered series and repeating the method,
    iv. If a straight line cannot be drawn between the current station and the next station, extrapolating a line from the current station at angles selected from the predetermined subset, and extrapolating a line from the next station at angles selected from the predetermined subset, testing to see where the extrapolated lines would intersect, recording the intersection point and drawing a line between the current station and the intersection point and between the intersection point and the next station, making the next station the current station and then taking a further next station from the ordered series and repeating the method.

2. A method as claimed in claim 1, comprising extrapolating a line from the current station at all possible angles in the predetermined subset, and extrapolating a line from the next station at all possible angles in the predetermined subset, testing to see where the extrapolated lines would intersect, recording the intersection point and drawing a line between the current station and the intersection point and between the intersection point and the next station, making the next station the current station and then taking a further next station from the ordered series and repeating the method.

3. A method as claimed in claim 1, comprising determining a direction of travel between the current and next station and during the extrapolation step, testing only forward angles from the current station to the next station and only reverse angles from the next station to the current station.

4. A method as claimed in any preceding claim, comprising joining the two lines at the intersection point by drawing an arc having an included angle the same as the angle between the lines, and having a centre point offset by a predetermined multiple of the width of lines, and truncating the lines at the beginning and end of the arc so that the lines do not directly join one another, but are instead joined by the arc.

5. A method as claimed in any preceding claim, comprising defining a branch by mapping a branchId against a subset of the station objects in the database, drawings lines between each station object in the branch, in order, until reaching the last station in the subset, then incrementing the branchId to retrieve a subsequent branch subset of station objects, determining if a previous branch has been specified for the current branch ID and if a previous branch has been specified, retrieving the coordinates of the last stop in that previous branch and prepending those coordinates of the said last station as the starting point for drawing the current branch.

6. A computer program product directly loadable into the internal memory of a digital computer, comprising software code portions for performing the steps of any preceding claim, when said product is run on a computer.

7. A computer system comprising an execution environment for running computer code portions and arranged to carry out the method of any of claims 1 to 5.

## Fig. 1

## Fig. 2

pt1

i

Z

s X

pt2

45°

radius 3.5x C

e

z = tan 45° x radius

## Fig. 3

s

pt1

i

Z

22.5°

pt2

radius 3.5x C

e

z = tan 22.5° x radius

## Fig. 4

Chesham

Chalfont & Latimer

Branch 4

Branch 3

Watford Junction

Amersham

Chorleywood

Watford

Branch 2

Watford High Street

Branch 0

Croxley

Bushey

Branch 5

Rickmansworth

Carpenders Park

Branch 6

Moor Park

Hatch End

Edgware

West Ruislip

Northwood

Headstone Lane

Stanmore

Hillingdon

Ruislip

Northwood Hills

Harrow & Wealdstone

Canons Park

Burnt Oak

Uxbridge

Ickenham

Ruislip Manor

Pinner

Queensbury

Colindale

Eastcote

North Harrow

Kenton

Kingsbury

Hendon Central

Ruislip Gardens

Rayners Lane

Harrow-on-the-Hill

Preston Road

Brent C

Branch 1

West Harrow

Northwick Park

Neasden

Dollis Hill

Gold

South Harrow

South Kenton

Wembley Park

Willesden Green

South Ruislip

North Wembley

Kilburn

West Hampstead

Reading

Sudbury Hill

Wembley Central

Stonebridge Park

Kensal Rise

Brondesbury Park

Kilburn

## Fig. 5

Europäisches
Patentamt

European
Patent Office

Office européen
des brevets

# EUROPEAN SEARCH REPORT

Application Number

EP 20 18 6981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Martin Ollenburg ET AL: "MANUSCRIPT FOR IEEE TRANSACTIONS ON VISUALIZATION AND COMPUTER GRAPHICS 1 Drawing and Labeling High-Quality Metro Maps by Mixed-Integer Programming",<br><br>27 May 2010 (2010-05-27), XP055764513,<br>Retrieved from the Internet:<br>URL:http://www1.pub.informatik.uni-wuerzbu rg.de/pub/wolff/pub/nw-dlhqm-10.pdf<br>[retrieved on 2021-01-13]<br>* abstract *<br>* Sections 3-5 *<br>* figures 1-4 *<br>* figure 6 *<br>* figures 8-9 * | 1-7 | INV.<br>G06T11/20 |
| X | JP 2020 042245 A (JIMBA MASAFUMI)<br>19 March 2020 (2020-03-19)<br>* abstract *<br>* paragraph [0002] - paragraph [0014] *<br>* paragraph [0019] - paragraph [0020] *<br>* paragraph [0024] - paragraph [0027] * | 1,6,7 | |
| X | Martin Nöllenburg ET AL: "Automated Drawing of Metro Maps",<br><br>20 August 2005 (2005-08-20), XP055764566,<br>Retrieved from the Internet:<br>URL:https://i11www.iti.kit.edu/extra/publi cations/n-admm-05da.pdf<br>[retrieved on 2021-01-13]<br>* abstract *<br>* Chapters 4-7 * | 1,6,7 | TECHNICAL FIELDS SEARCHED (IPC)<br><br>G06T |

The present search report has been drawn up for all claims

| Place of search | Date of completion of the search | Examiner |
|---|---|---|
| Munich | 15 January 2021 | Leclercq, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 18 6981

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2021

| Patent document cited in search report | Publication date | Patent family member(s) | Publication date |
|---|---|---|---|
| JP 2020042245 A | 19-03-2020 | NONE | |

For more details about this annex : see Official Journal of the European Patent Office, No. 12/82

EPO FORM P0459